Europäisches Patentamt

(19) European Patent Office

Office européen des brevets

(11) EP 0 707 534 B1

## (12) FASCICULE DE BREVET EUROPEEN

(45) Date de publication et mention
de la délivrance du brevet:
**06.05.1999 Bulletin 1999/18**

(21) Numéro de dépôt: **94921683.2**

(22) Date de dépôt: **05.07.1994**

(51) Int. Cl.⁶: $B29C\ 47/50$, $B29C\ 47/76$

(86) Numéro de dépôt international:
**PCT/FR94/00825**

(87) Numéro de publication internationale:
**WO 95/01866 (19.01.1995 Gazette 1995/04)**

(54) **REACTEUR ET APPAREIL DE TRAITEMENTS PHYSICOCHIMIQUES DE SUBSTANCES A L'ETAT SOLIDE, LIQUIDE OU GAZEUX**

REAKTOR UND APPARATE ZUR PHYSISCH-CHEMISCHEN BEHANDLUNG VON SUBSTANZEN IN FESTEM, FLÜSSIGEN ODER GAS-ZUSTAND

REACTOR AND APPARATUS FOR PHYSICOCHEMICALLY PROCESSING SOLID, LIQUID OR GASEOUS SUBSTANCES

(84) Etats contractants désignés:
**AT CH DK ES FR GB GR IE IT LI LU NL PT SE**

(30) Priorité: **06.07.1993 FR 9308536**

(43) Date de publication de la demande:
**24.04.1996 Bulletin 1996/17**

(73) Titulaire: **TIM INDUSTRIE
69400 Villefranche S/Saone (FR)**

(72) Inventeur:
**PONCET, Pierre, Joseph
F-69003 Lyon (FR)**

(74) Mandataire:
**Myon, Gérard Jean-Pierre et al
Cabinet Lavoix Lyon
62, rue de Bonnel
69448 Lyon Cedex 03 (FR)**

(56) Documents cités:
**DE-A- 4 141 102          DE-C-  915 689
US-A- 2 836 851          US-A- 3 572 644
US-A- 3 687 288          US-A- 3 738 409
US-A- 3 940 220**

## Description

Les phénomènes chimiques ou physico-chimiques se produisent aux interfaces des substances en présence, c'est-à-dire au niveau des surfaces de contact qui règnent aux confins des petits agglomérats de corps solides, de liquides ou de gaz ; c'est aussi à ce niveau que les forces de tension superficielle se développent pour engendrer l'adsorption et la désorption moléculaires et que prennent naissance la dissolution des gaz ou leur émergence de même que les dissolutions ou séparations des liquides et des solides entre eux ainsi que les échanges thermiques et les forces d'étanchéité pelliculaires.

La présente invention se réfère en conséquence à des appareils propres à créer un niveau élevé d'activation des interfaces en procédant en permanence à une division et à une reconstitution non turbulentes desdites substances.

On a décrit dans le brevet français 1 562 004 un appareil destiné à la réalisation de mélanges homogènes à partir de plusieurs matières à l'état pâteux, pulvérulent ou fibreux.

L'appareil en question est constitué par deux vis à noyau tronconique évasé en direction des extrémités libres desdites vis, lesquelles sont placées dans deux alésages adjacents communiquant par des passages longitudinaux. Le volume utile contenant la matière est ainsi croissant et décroissant, de la même façon, tout le long de chaque alésage. La matière passe d'un alésage à l'autre en se divisant et en se recolla-tionnant méthodiquement. Elle quitte un volume et en occupe un autre de même grandeur sans compression ni dépression.

Les vis font déplacer la matière dans le sens des flèches représentées en fig. 3 du brevet considéré, la matière entrant par l'orifice A pour sortir par l'orifice B. Cette action des vis réalise un renouvellement rapide des interfaces solides et liquides en contact dans le volume constant régnant dans le réacteur.

L'expérience montre que cette structure :

- gêne le renouvellement des interfaces liquides-gaz et solides-gaz ;
- ne ménage pas, en fonctionnement, l'espace libre de grande section nécessaire au passage des gaz, permettant leur dissolution ou leur séparation du milieu réactionnaire.

Cela limite considérablement les applications d'un tel appareil. En effet, la réalisation et la conduite des réactions chimiques exigent de maîtriser aussi les phases gazeuses.

Les perfectionnements qui font l'objet de la présente invention visent à remédier aux inconvénients précités et à permettre la réalisation d'un appareil qui soit susceptible de mieux maîtriser ces phases gazeuses et la génération des interfaces solides-gaz et liquides-gaz.

Dans l'exposé ci-après :

- le terme "matière" désigne les substances dans un état où dominent les solides et les liquides ;

- les termes "volume vide" ou "espace vide" désignent un milieu gazeux.

L'invention a pour objet l'appareil qui est défini à la revendication 1.

Le dessin annexé, donné à titre d'exemple non limitatif, permettra de mieux comprendre l'invention, les caractéristiques qu'elle présente et les avantages qu'elle est susceptible de procurer :

Fig. 1 est une coupe longitudinale d'un appareil comportant application des perfectionnements suivant l'invention.

Fig. 2 est une coupe suivant II-II (fig. 1). On y a indiqué en I-I le plan de coupe de fig. 1.

Fig. 3 est une coupe qui illustre schématiquement la circulation de la matière dans l'appareil suivant l'invention.

Fig. 4 est une coupe semblable à celle de fig. 1, mais illustrant une première variante.

Fig. 5 est une coupe suivant V-V (fig. 4).

Fig. 6 est une coupe longitudinale d'un appareil suivant une autre forme de réalisation.

Fig. 7 est une coupe suivant VII-VII (fig. 6).

Fig. 8 est une coupe longitudinale d'une autre variante d'exécution de fig. 1.

Fig. 9 est une coupe suivant IX-IX (fig. 8).

Dans le but de simplifier la description qui va suivre, les noyaux coni-ques de chacune des vis décrites sont représentés avec un angle constant tout le long des axes de ces vis, ce qui produit une sortie régulière des matières le long des génératrices.

Cette sortie peut bien entendu être modulée en faisant varier les pentes de ces noyaux coniques le long des axes géométriques des vis.

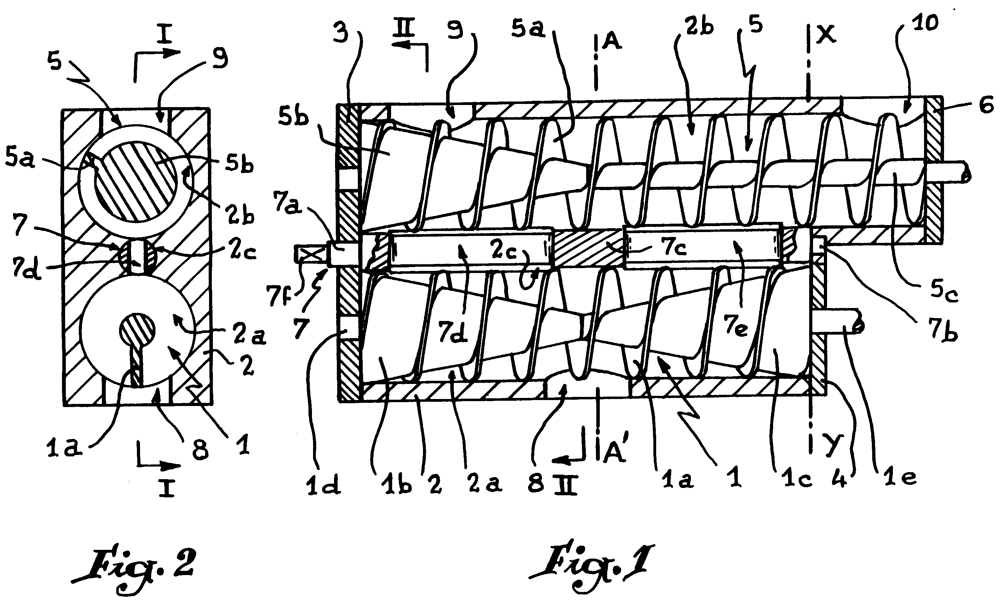

L'appareil réalisé suivant une première forme d'exécution de l'invention telle qu'illustrée en fig. 1 comprend une première vis 1, dont le filet 1a coopère avec un alésage ou espace 2a ménagé dans un fourreau 2. Le noyau de la vis est bi-conique, c'est-à-dire qu'il comporte deux parties coniques reliées par leurs sommets, les deux parties du noyau étant respectivement référencées en partant de la gauche 1b et 1c. Le noyau est centré par des bouts d'arbre 1d, 1e tourillonnant dans des flasques 3, respectivement 4. Le bout d'arbre 1e est convenablement entraîné en rotation par tout moyen non représenté.

La deuxième partie de l'appareil suivant l'invention est constituée d'une vis 5 dont le filet 5a coopère avec un second alésage ou espace 2b ménagé parallèlement au premier 2a dans le fourreau 2, comme illustré en fig. 2.

La vis 5 comporte un noyau cylindro-conique (5c-5b) dont le grand diamètre est à l'une des extrémités. Le diamètre de ce noyau diminue le long de la partie 5b de la vis. Il atteint dans sa partie 5c un minimum qui reste constant jusqu'à l'extrémité correspondante de cette vis.

On observe que la vis 1 est d'une longueur inférieure à celle de la vis 5, de telle sorte que la partie cylindrique 5c du noyau de la vis 5 soit d'une longueur supérieure à celle de la partie 1c du noyau de la vis 1. Cette augmentation de longueur a pour raison essentielle de permettre de relier par une grande section latérale l'appareil et le groupe producteur de vide, en vue de permettre une meilleure circulation des gaz. Cette disposition n'a pas d'influence dans l'explication concernant le principe du fonctionnement suivant l'invention. Bien entendu, l'alésage 2b est fermé à ses deux extrémités, d'une part par le flasque 3, d'autre part par un flasque 6.

Le fourreau 2 est percé d'un trou longitudinal 2c sécant par rapport aux alésages 2a et 2b sur toute la longueur de ces derniers. Bien entendu, l'axe géométrique longitudinal du trou 2c est parallèle à ceux des alésages 2a, 2b.

Dans le trou 2c est engagé un boisseau 7 présentant deux portées extrêmes 7a, 7b et une portée médiane 7c. Entre ses portées, le boisseau comporte deux fentes 7d, 7e constituant des passages faisant communiquer les alésages 2a et 2b. A l'extérieur du flasque 3, le boisseau 7 comporte une tête 7f permettant de le tourner en vue de faire varier les sections des passages entre les deux alésages.

Dans une autre forme de réalisation, non représentée, le boisseau 7 est composé de deux pièces séparées pouvant être actionnées séparément. Cette disposition permet de mieux maîtriser la circulation des matières, notamment pendant les phases de remplissage et de vidange.

On ne sortirait pas de l'invention en remplaçant cet obturateur réglable rotatif par un dispositif du genre tiroir à déplacement axial.

Il va de soi que le boisseau 7 pourrait être supprimé, les alésages cylindriques parallèles 2a, 2b communiquant directement par une fente continue, comme cela est connu dans la pratique.

On observe enfin la présence dans la partie médiane du fourreau 2 d'une entrée des matières à traiter référencée 8 et débouchant dans la partie médiane de la vis 1, ainsi qu'une sortie de matière 9 disposée à l'extrémité à plus grand diamètre de la partie 5b du noyau de la vis 5.

A l'opposé de la sortie 9 se trouve un passage 10 destiné à l'extraction ou à l'introduction de gaz.

Dans les explications qui vont suivre, on considèrera que la longueur de la partie 5c du noyau de la vis 5 est égale à la longueur de la partie 1c du noyau de la vis 1, l'alésage 2b s'arrêtant fictivement suivant une ligne X-Y passant par le flasque 4.

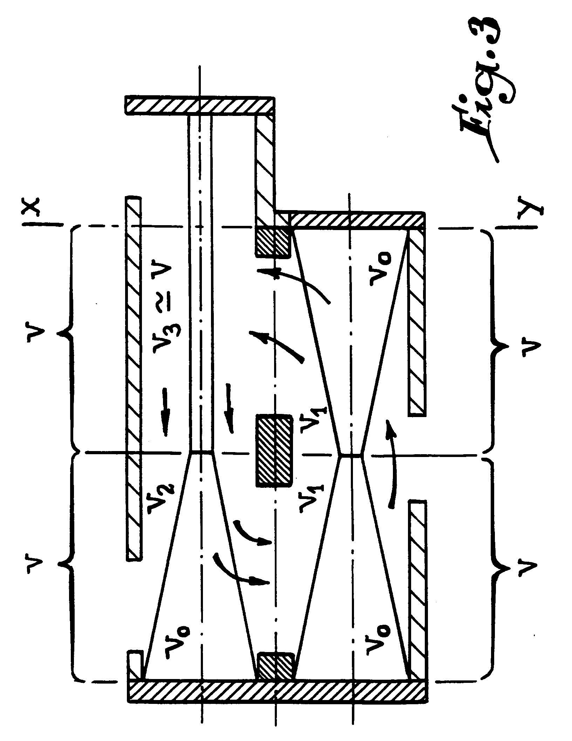

Chacun des deux espaces cylindriques 2a et 2b occupe le même volume soit 2V. Le volume total des deux espaces ou alésages 2a ou 2b est égal à 2V + 2V = 4V (fig. 3).

Dans l'exemple choisi, les trois noyaux coniques ont le même angle constant le long des vis, de telle sorte qu'ils engendrent chacun un volume $V_0 = V/3$.

Dans ces conditions dans l'alésage 2a, les volumes correspondant à l'espace libre autour des noyaux coniques et qu'on appelle V1, ont chacun pour valeur :

$$V_1 = V - V/3 = 2V/3$$

- l'espace libre autour de la partie 5b du noyau de la vis 5 est appelé $V_2$, tandis que celui autour de la partie cylindrique 5c du noyau de la vis 5 est appelé $V_3$. Pour des raisons de simplicité, on estimera ce volume $V_3$ égal à V, c'est-à-dire au demi-volume total de l'espace ou alésage 2b, restant entendu que le volume $V_2$ est égal à celui $V_1$. On aura donc :

$$V_3 = V \text{ et } V_1 = V_2 = 2V/3$$

Le volume utile total du réacteur est donc $2V_1 + V_2 + V_3$ soit en se rapportant à V :

$$2V/3 + 2V/3 + 2V/3 + 3V/3 = 9V/3 = 3V$$

La quantité de matière en opération dans un cycle réactionnel est comprise entre 6V/3 et 8V/3 laissant libre dans l'espace 2b un volume d'environ V/3.

Il faut aussi que, dans tout l'espace 2b, la section utile soit maximale.

Cela est obtenu par la structure cylindrique et le petit diamètre du noyau de la vis 5c.

Le volume $V_3 = V$ situé autour de la partie cylindrique 5c du noyau de la vis 5 présente ainsi une section annulaire maximale constante jusqu'à l'orifice 10 de même section.

Cette section annulaire importante, de même que celle de l'orifice 10, sont en effet indispensables notamment pour permettre le travail sous pression réduite, lequel exige que les pertes de charges soient très faibles dans l'enceinte de travail, dans les condenseurs éventuels et dans le groupe générateur de vide situés en aval du réacteur.

On observe que la grande section de l'orifice 10 est obtenue grâce à la longueur de l'alésage 2b qui est supérieure à celle de l'alésage 2a, cette disposition permettant aussi de conserver le flasque 6 qui supporte la vis 5 en rotation.

La matière circule suivant les flèches. Les forces d'entraînement règnent dans tous les volumes de l'appareil sans espace mort.

Il convient de noter que :

- suivant les conditions d'utilisation du réacteur, on peut supprimer le flasque 6 et le palier de la vis correspondante, il est alors possible de relier directement cette extrémité de l'alésage 2b au groupe générateur de vide par une section maximale et constante ;

- l'allongement de l'alésage 2b qui permet notamment de ménager une grande section de raccordement, peut être réduite quand cette section de raccordement peut elle-même être réduite. C'est le cas par exemple quand l'introduction ou l'extraction d'un gaz est effectuée sous pression.

Par construction, dès que la machine est en fonctionnement, la matière circulant ne peut occuper qu'une partie de l'espace ou alésage 2b limité entre le plan A, A' passant par le sommet des parties tronconiques des deux vis et le plan X-Y contenant le flasque 4, tandis que les trois autres volumes sont pleins sans d'ailleurs exercer une contrainte majeure sur la matière dans ces parties.

A chaque rotation de la vis 1, le volume de matière égal à 2/3V est introduit méthodiquement dans l'espace ou alésage 2b tout le long de la génératrice qui relie les alésages 2a et 2b.

Dans le même temps, la vis 5 rassemble et évacue dans l'espace 2a le même volume 2/3V qu'elle a reçu de la vis 1.

Cela produit dans l'espace 2b un volume vide V - 2/3V = V/3 dans lequel règne de fait une pression gazeuse déterminée.

Le comportement de la matière en transit dans l'espace 2b est nouveau en raison de la génération d'un volume V/3 vide dû à la forme cylindroconique du noyau de la vis 5 et qui est engendré à chaque tour du réacteur en mouvement.

En effet, pendant le recollationnement de la matière dans l'espace 2b dont le volume est le plus grand en raison de la dimension et de la forme cylindrique du noyau de la vis 5, la phase gazeuse intervient directement avec les phases liquides et solides et participe activement à la génération, à la composition et au renouvellement des interfaces gaz-liquides et gaz-solides.

L'expérience montre que le cours de la réaction peut provoquer la variation du volume libre réel régnant dans l'espace 2b. C'est un paramètre très important qu'il faut connaître en permanence. Il est toujours utile de le mesurer. Cela est indispensable dans le cas de fonctionnement en continu.

Ainsi construit, l'appareil suivant l'invention illustré en fig. 1 active intensément le renouvellement méthodique des interfaces dans toutes les phases successives du cycle opérationnel, mais c'est autour de la partie cylindrique 5c du noyau de la vis 5, qu'en raison du volume libre dans lequel pénètrent les substances, les interfaces liquides-gaz et solides-gaz se développent et se modifient au maximum.

On provoque aussi la séparation rapide des gaz qui sont dissous ou adsorbés y compris ceux qui résultent des réactions.

De même, quand on alimente un gaz sous pression par le passage 10, ce même renouvellement d'interfaces accélère les dissolutions ou les émulsions et les réactions de ce gaz au cours du processus de travail.

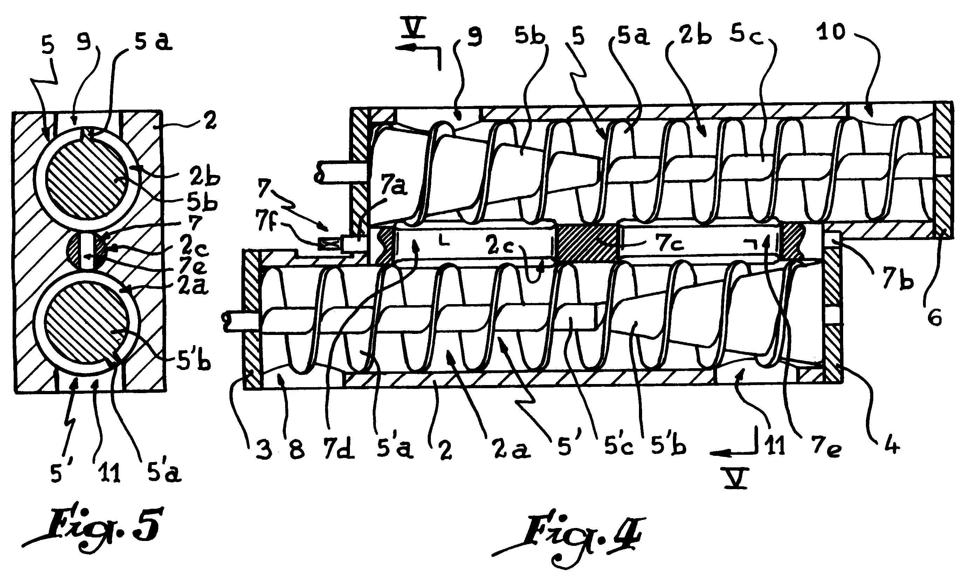

Comme illustré en fig. 4 et 5, la vis biconique 1 de fig. 1 est remplacée par une vis 5' cylindroconique qui pourrait être éventuellement décalée axialement par rapport à celle 5 en vue de constituer un passage de section importante pour la circulation des gaz. Dans ce cas, les deux parties cylindriques des noyaux des vis sont opposées.

Le fonctionnement d'un réacteur ainsi constitué est substantiellement identique à celui de l'appareil illustré en fig. 1, la seule différence résidant dans le fait que l'on dispose de deux espaces libres au lieu d'un seul. Ce montage présente donc un intérêt, notamment quand les volumes gazeux en cause sont importants, car il permet de doubler l'espace libre supplémentaire pour l'introduction ou l'extraction du gaz en cours de traitement. On observe que l'entrée 8 se trouve à l'extrémité de la partie cylindrique de la vis 5' et qu'un passage 11 est ménagé dans le foureau au niveau du grand diamètre de la partie conique de ladite vis 5'.

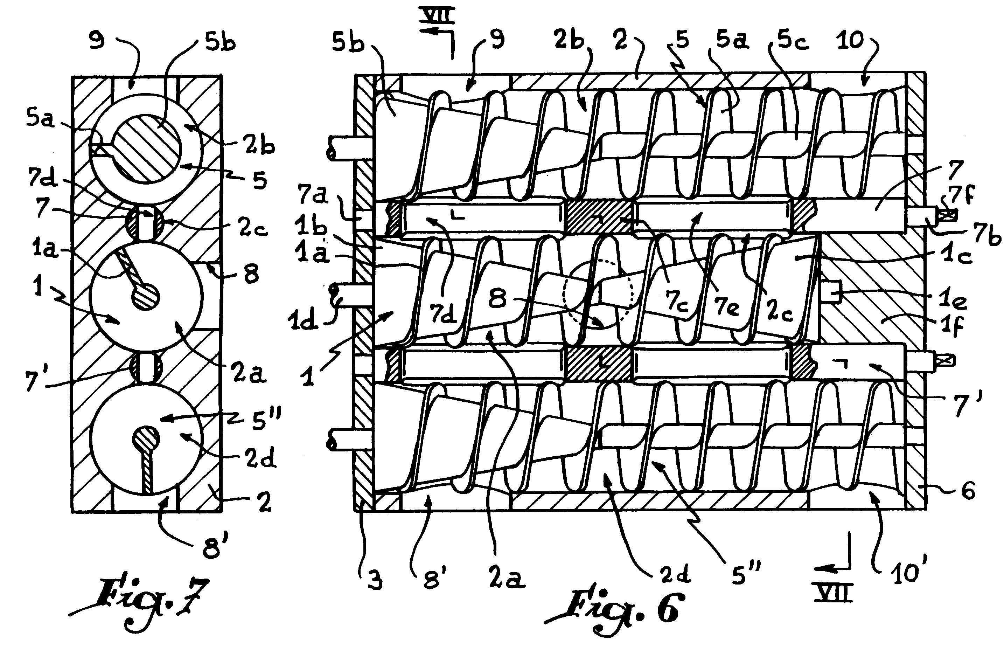

On a illustré en fig. 6 une variante de l'appareil illustré en fig. 1 suivant laquelle une seconde vis 5" identique à celle 5 a été accolée à la vis 1 symétriquement par rapport à la vis 5, dans un alésage 2d communiquant avec l'alésage 2a au moyen d'un boisseau 7' semblable au boisseau 7.

Cette structure entraîne plusieurs modifications.

Tout d'abord, la vis 1 comporte un talon 1f qui compense la différence de longueur de la vis 1 par rapport aux vis 5 et 5". En outre, on prévoit un second passage 10' de grande section semblable à celui 10 nécessaire pour une liaison en cas de travail sous très basse pression.

Les sorties 10 et 10' peuvent également être situées en bout des vis 5 et 5", comme sur la variante de fig. 1.

L'entrée 8 des matières à traiter est latérale.

Enfin, l'alésage 2b peut ne pas comporter de sortie de matière, celle-ci étant reportée dans l'alésage 2d en 8' ou vice et versa.

On comprend que le second boisseau 7' placé entre les vis 1 et 5" permet la circulation de la matière dans le sens des flèches, entre les différents alésages.

Il est évident que dans le cas de ce mode d'exécution, le boisseau 7' comporte également des portées entre lesquelles se trouvent des fentes déterminant les passages des matières, comme dans le cas du boisseau 7.

De même, les boisseaux 7 et 7' peuvent être réalisés chacun en deux parties, ce qui permet de mieux contrôler le travail des matériaux au cours de certaines parties du cycle de travail.

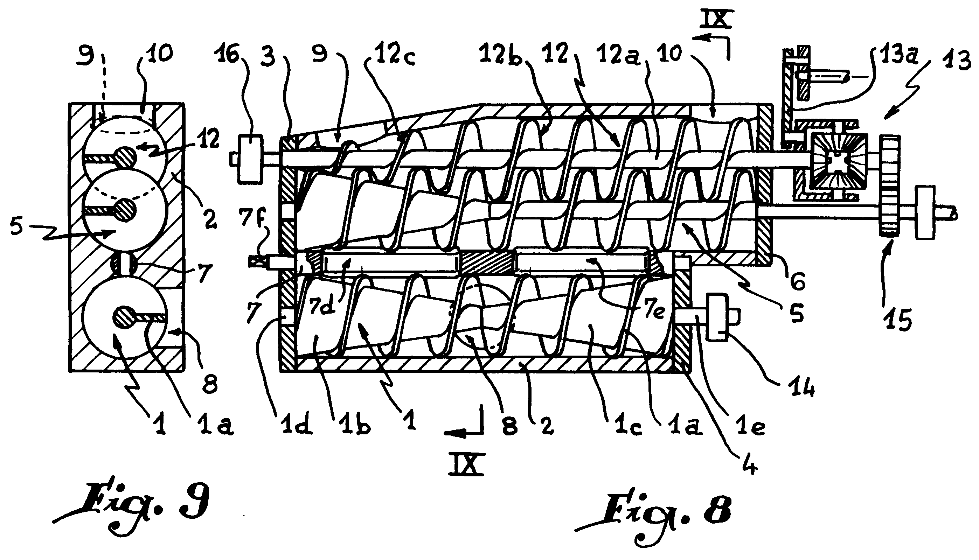

On a illustré en fig. 8 un appareil dans lequel les dispositions originales de fig. 1 sont complétées par une vis 12 tournant en synchronisme avec la vis 5, mais pouvant être déphasée d'un angle variable pendant la rotation. Cette vis 12 est pourvue d'un noyau cylindrique 12$\underline{a}$ associé à un filet comprenant une partie 12$\underline{b}$ à périphérie cylindrique dont la longueur correspond à celle du noyau 5$\underline{c}$ de la vis 5 et une seconde partie 12$\underline{c}$ dont la périphérie est conique, sa conicité correspondant à celle de la partie conique 5$\underline{b}$ du noyau de la vis 5. Bien entendu, on affecte au fourreau une forme correspondante afin qu'il détermine un alésage spécifique 2$\underline{e}$ pour ladite vis 12.

La grande section vide qui doit obligatoirement exister dans l'espace 2$\underline{b}$ ou 2$\underline{e}$ pendant le fonctionnement est assurée par :

- la configuration des noyaux 5$\underline{c}$ 12$\underline{c}$ qui sont cylindriques

- le profil et le pas des filets

- le déphasage alterné des vis 5 et 12 engendré par un différentiel ou déphaseur 13.

La largeur des filets des vis 5 et 12 est beaucoup plus petite que la largeur du creux qui sépare deux filets consécutifs.

Cette configuration laisse un espace libre très important entre les flancs de filet des vis (tout en assurant un nettoyage sans espace mort de tout le volume pendant la rotation des vis). Les vis 5 et 12 tournent à la même vitesse. Leur position angulaire relative est réglable entre deux limites par le différentiel ou déphaseur 13.

La rotation des vis est assurée avec précision par le différentiel 13 qui maîtrise le déphasage des deux vis.

Le déphasage est mesuré et modifié en permanence suivant une loi choisie en fonction de l'application du réacteur.

La modification de l'angle de déphasage a pour conséquence d'éloigner deux flancs de filets contigus et en même temps de rapprocher les deux flancs de filets adjacents. Le déphasage angulaire maximal correspond aux positions extrêmes de contacts des flancs de filets.

Soit D l'angle de déphasage maximum. Appelons $D_0$ la moitié de l'angle D. Quand le déphasage est $D_0$, les flancs des filets des vis 5 et 12 sont équidistants.

Au déphasage + $D_0$ les flancs de filets se touchent.

Au déphasage - $D_0$ ce sont les flancs opposés qui se touchent.

Pour un déphasage constant $D_0$, les vis 5 et 12 étant en rotation fonctionnent l'une et l'autre de la même façon que la vis 5 de l'appareil suivant fig. 1.

En revanche, quand l'angle de déphasage évolue entre les valeurs + $D_0$ et - $D_0$, des résultats nouveaux produits par cette disposition de la fig. 8 sont mis en évidence :

les vis 5 et 12 développent alors, en sens inverses, de part et d'autre de leurs flancs de filets, deux volumes dont la somme est constante.

Donc, à chaque alternance, l'un des volumes croît pendant que l'autre décroît.

- Ce processus produit les deux effets nouveaux suivants :

Entre les filets des vis :

. d'un côté, un volume vide croissant favorise la section maximum nécessaire pour l'évolution, le renouvellement des interfaces gaz-liquides ou gaz-solides et la circulation des gaz sous vide moléculaire
. de l'autre, un volume décroissant répartit la matière solide et liquide dans les espaces libres adjacents et constitue un facteur important de renouvellement de ces interfaces à composantes gazeuses.

- Il empêche aussi toute stagnation éventuelle de matière à l'intérieur du réacteur et entre les flancs des vis.

Conformément aux caractéristiques de l'invention, les structures montrées en fig. 8 et 9 provoquent et gouvernent, dès la mise en marche du réacteur, les mouvements de la matière et génèrent les espaces partiellement occupés par les gaz et dans ces espaces, produisent et renouvellent notamment des interfaces solides-gaz et liquides-gaz.

A cet effet, les secteurs de division du réacteur répartissent méthodiquement la matière à vitesse régulière, sans compression ni dépression dans l'espace V3 (fig. 3) où s'effectue le recollationnement en même temps qu'est généré à cet endroit le volume libre qui est une caractéristique du procédé suivant l'invention.

C'est dans cette partie de l'appareil que se trouvent les vis 5 et 12 soumises à un déphasage variable et contôlé en fonction des caractéristiques de la réaction considérée.

La rotation des vis 5 et 12 entraîne la matière en provoquant une force de poussée axiale de propulsion qui est mesurée sur les paliers supports de vis à l'aide de jauges de contraintes ou autres moyens schématisés en 14, 15 et 16 sur chacune des vis du dispositif illustré en fig. 8. Cette force axiale est désignée par FAP 0 tandis que le couple de rotation correspondant est appelé CR 0.

L'écart angulaire des vis est maintenu par le différentiel ou déphaseur 13 sur lequel est appliqué une force de réglage de l'écart angulaire des vis 5 et 12 que l'on désigne par C D. Cette force est appliquée par exemple au moyen d'une biellette 13a attaquant la cage du différentiel et entraînée par un maneton.

Pour la clarté de l'exposé :

a - si l'on considère le cas ou V3 ne contient pas de matière, l'écart angulaire possible avant contact des flancs des filets des vis 5 et 12 dans chaque sens est maximale. On désignera par Dmax cet écart.

Si l'on règle le déphaseur 13 à un angle $D0 = Dmax/2$, dans cette position les flancs des filets 5 et 12 sont équidistants.

b - une quantité de matière introduite dans l'appareil dans l'orifice 8 génère pendant le fonctionnement du réacteur, dans l'espace V3, un volume gazeux V/3 complémentaire du volume occupé par la matière solide et liquide.

On désigne par :

- CD la force appliquée au déphaseur 13 pour faire varier l'écart angulaire des vis par l'intermédiaire de la biellette 13a ;

- FAP la force de poussée axiale de propulsion de la matière exercée et mesurée sur chaque palier des vis 5 et 12.

1°) dans cet état, le différentiel ou déphaseur 13 étant réglé à D0, les forces développées pour entraîner les vis 5 et 12 sont minimales (respectivement (CD)0 et (FAP)0).

2°) par modification de l'état angulaire D0, les flancs des filets des vis 5 et 12 sont amenés en contact par l'intermédiaire des matières solides et liquides.

Dès que ce contact se produit, (CD)0 augmente et devient (CD)1. A cette augmentation correspondent sur les vis 5 et 12, des forces axiales de déphasage de sens opposé (FAD)1 mesurées sur les paliers de vis par des moyens connus constitués par exemple par les jauges de contrainte 14, 15 et 16 évoquées plus haut. La connaissance de l'écart angulaire de déphasage $\Delta D = D1$ est donc possible à tout moment par la mesure de la force axiale (FAD)1.

Il est ainsi possible de réguler en permanence le déroulement de la réaction en cours, la variation du volume gazeux libre et de maîtriser en conséquence les entrées et sorties de matière du réacteur.

On notera que :

- lorsque l'écart angulaire maximal est atteint, les forces appliquées au déphaseur 13 et les forces axiales FA mesurées sur les paliers d'entraînement des vis 5 et 12 sont maximales. Cette constatation conduit à des applications nouvelles.

- à titre d'exemple le processus décrit ci-dessus permet notamment de développer et de maîtriser la force appliquée sur de la matière entre les flancs de filets pendant le traitement réactionnel.

Les matériaux peuvent aussi être soumis à des efforts superficiels programmés, des micro-broyages et des traitements mécaniques de surface originaux dans le réacteur.

Bien entendu, la structure auto-nettoyante décrite en fig. 8 et 9 peut être avantageusement appliquée à l'appareil illustré en fig. 1 ou à celui montré en fig. 4.

On comprend que les configurations évoquées permettent, si on le désire, de réaliser des machines dont l'axe géométrique général est incliné d'un angle réglable par rapport au plan horizontal. Cette disposition concerne les matériaux solides traités par lots successifs.

L'on constate que la combinaison des moyens et caractéristiques décrits, en particulier :

- d'une part l'angle d'inclinaison;

- d'autre part, le mode de fonctionnement de l'appareil,

produit des résultats nouveaux qui sont principalement dûs à la suppression des "espaces morts" induits par les jeux fonctionnels à l'intérieur du réacteur.

Ces résultats proviennent notamment de l'action conjuguée des forces développées en marche par le réacteur et par les composantes des forces de gravité.

Pendant la phase de travail du réacteur, les sens des vecteurs de gravité et d'entraînement sont opposés. Cela garantit partout le renouvellement des interfaces et s'oppose à la sortie des substances en cours de traitement.

En revanche, pendant la vidange tous les vecteurs agissent dans le sens d'extraction complète de la matière par le changement du sens de rotation d'une seule des deux vis de travail.

En résumé, la présente invention met en oeuvre et conjugue pour obtenir des effets nouveaux :

- les dispositions connues de division et de recollationnement de la matière,

- des dispositions nouvelles de vis à noyaux cylindro-conique qui notamment génèrent dans l'espace 2b :

  . un volume vide V

  . une grande section de circulation des gaz dans cet espace 2b

  . une grande section des orifices d'accès des gaz

  . l'entretien de la continuité de la section maximale de la circulation des gaz et aussi des solides et des liquides

  . la mesure de cette section libre

  . l'auto-nettoyage du système.

On comprend que les moyens pour engendrer un espace libre supplémentaire (sans espace mort) permettant l'introduction et l'extraction de gaz en cours de traitement dans l'appareil suivant l'invention peuvent être constitués par une chambre supplémentaire augmentant le volume de l'alésage d'une des deux vis sans qu'aucune d'elles ne comporte un noyau cylindroconique.

**Revendications**

1. Appareil destiné aux réactions et aux traitementsphysicochimiques de substance à l'état solide, liquide et/ou gazeux, du genre comprenant un fourreau (2) pourvu d'au moins deux alésages (2a, 2b) dans chacun desquels est disposée une vis (1, 5) et qui communiquent l'un avec l'autre sur une certaine partie de leur longueur par des passages (7d, 7e) appropries permettant une circulation des substances mélangées d'un alésage à l'autre, l'une au moins des vis (5) étant pouvue de moyens propres à engendrer en fonctionnement un espace libre supplémentaire permettant l'introduction ou l'extraction de gaz en cours de traitement, caractérisé en ce que l'espace libre est engendré par le fait que l'une des vis (5) comporte un tronçon de noyau partiellement cylindrique (5c) dont le diamètre est approximativement égal à celui de la partie à plus faible diamètre du tronçon de noyau conique (5b) s'étendant sur le reste de la longueur de ladite vis (5).

2. Appareil suivant la revendication 1, caractérisé en ce que la longueur du tronçon cylindrique (5c) du noyau est supérieure à celle de son tronçon conique (5b) afin de constituer une chambre dans laquelle on réalise l'introduction ou l'extraction de gaz.

3. Appareil suivant la revendication 2, caractérisé en ce qu'il comprend deux vis cylindro-coniques (5, 5') afin d'engendrer deux espaces (V3) générateurs d'interface solides-gaz et liquides-gaz.

4. Appareil suivant l'une quelconque des revendications 1 à 3, caractérisé en ce qu'une seconde vis (5') à noyau cylindro-conique est associée à un troisième alésage (2d) du fourreau (2).

5. Appareil suivant l'une quelconque des revendications 1 à 4, caractérisé en ce que la communication entre les alésages (2a, 2b, 2d) du fourreau (2) s'effectue au moyen d'un boisseau (7, 7') permettant le réglage de la section des passages entre les alésages (2a, 2b, 2d).

6. Appareil suivant la revendication 5, caractérisé en ce que le boisseau de réglage (7, 7') tourne dans un trou (2c) réalisé de manière sécante aux alésages adjacents, ledit boisseau comportant des portées entre lesquelles se trouvent des fentes qui déterminent les passages entre lesdits alésages.

7. Appareil suivant la revendication 6, caractérisé en ce que le boisseau de réglage (7, 7') est constitué par deux parties séparées, permettant le réglage indépendant de la position angulaire de chacune de ses parties en fonction des besoins.

8. Appareil suivant l'une quelconque des revendications 1 à 6, caractérisé en ce qu'il comporte en outre une vis (12) imbriquée avec la vis à noyau cylindro-conique (5).

9. Appareil suivant l'une quelconque des revendications 1 à 8, caractérisé en ce qu'il comprend des systèmes de mesure (14, 15, 16) et de régulation (13) pour le contrôle permanent du volume gazeux libre dans l'appareil.

10. Appareil suivant l'une quelconque des revendications 1 à 9, caractérisé en ce que son axe géométrique est incliné d'un angle réglable avec le plan horizontal afin de supprimer les effets d'espace mort induit par le jeu fonctionnel existant à l'intérieur dudit appareil.

## Claims

1. Apparatus intended for reactions and for physicochemical treatment of substances in the solid, liquid and/or gaseous state, of the kind comprising a barrel (2) which has at least two bores (2a,2b) in each of which there is a screw (1,5) and which communicate with one another over a certain part of their length via appropriate passages (7d,7e) allowing the mixed substances to flow from one bore to the other, at least one of the screws (5) having means which during operation are capable of generating an additional empty space allowing the introduction or extraction of gas during treatment, characterized in that the empty space is generated through the fact that one of the screws (5) comprises a section of partially cylindrical core (5c) the diameter of which is approximately equal to that of the smallest-diameter part of the section of conical core (5b) extending along the rest of the length of the said screw (5).

2. Apparatus according to Claim 1, characterized in that the length of the cylindrical section (5c) of the core is greater than that of its conical section (5b) so as to form a chamber in which the gas is introduced or from which it is extracted.

3. Apparatus according to Claim 2, characterized in that it comprises two cylindro-conical screws (5,5') so as to generate two spaces (V3) that generate solid-gas and liquid-gas interfaces.

4. Apparatus according to any one of Claims 1 to 3, characterized in that a second screw (5') with a cylindro-conical core is associated with a third bore (2d) of the barrel (2).

5. Apparatus according to any one of Claims 1 to 4, characterized in that the communication between the bores (2a,2b,2d) of the barrel (2) takes place by means of a spool (7,7') which allows the cross-section of the passages between the bores (2a,2b,2d) to be adjusted.

6. Apparatus according to Claim 5, characterized in that the adjusting spool (7,7') turns in a hole (2c) made so that it is secant to the adjacent bores, the said spool having bearing surfaces between which there are slots which determine the passages between the said bores.

7. Apparatus according to Claim 6, characterized in that the adjusting spool (7,7') is made of two separate parts, allowing the angular position of each of its parts to be adjusted independently as required.

8. Apparatus according to any one of Claims 1 to 6, characterized in that it further comprises a screw (12) imbricated with the screw (5) with cylindro-conical core.

9. Apparatus according to any one of Claims 1 to 8, characterized in that it comprises measurement (14,15,16) and adjusting (13) systems for continuous control of the free gaseous volume within the apparatus.

10. Apparatus according to any one of Claims 1 to 9, characterized in that its geometric axis is inclined by an adjustable angle with respect to the horizontal plane in order to eliminate the dead space effects caused by the operating clearance that there is within the said apparatus.

## Patentansprüche

1. Gerät für Reaktionen und Behandlungen physikalischchemischer Art von Substanzen eines festen flüssigen und/oder gasförmigen Zustandes mit folgenden Merkmalen: ein Gehäuse (2), das mit wenigstens zwei Bohrungen (2a, 2b) ausgebildet ist, in welchen jeweils eine Schraube oder Schnecke (1, 5) angeordnet ist und die miteinander auf einem bestimmten Teil ihrer Länge über entsprechende Durchlässe (7d, 7e) in Verbindung stehen, welches eine Zirkulation vermischter Substanzen von einer zur anderen Bohrung ermöglicht, wobei wenigstens eine Schraube oder Schnecke (5) mit geeigneten Mitteln in der Lage ist, bei Betrieb einen zusätzlichen Freiraum zu erzeugen, der während der Behandlung das Zuführen oder Entnehmen von Gas ermöglicht,
dadurch gekennzeichnet,
daß der Freiraum dadurch erzeugt wird, daß die eine Schraube oder Schnecke (5) einen Kern mit einem teilweise zylindrischen Kernabschnitt (5c) umfaßt, dessen Durchmesser ungefähr gleich ist zu dem des Teils mit dem kleinsten Durchmessers eines konischen Kernabschnitts (5b), der sich über den Rest der Länge dieser Schnecke (5) erstreckt.

2. Gerät nach Anspruch 1, dadurch gekennzeichnet, daß die Länge des zylindrischen Abschnitts (5c) des Kerns größer ist als die Länge des konischen Abschnitts (5b), um eine Kammer auszubilden, in welcher das Zuführen oder Entnehmen von Gas durchführbar ist.

3. Gerät nach Anspruch 2, dadurch gekennzeichnet, daß es zwei zylindrisch-konische Schrauben oder Schnecken (5, 5') umfaßt, um zwei, eine Grenzfläche fest-gasförmig und eine Grenzfläche flüssig-gasförmig erzeugende Zwischenräume (V3) hervorzubringen.

4. Gerät nach einem der Ansprüche 1 bis 3, dadurch gekennzeichnet, daß eine zweite Schraube oder Schnecke (5') mit einem zylindrisch-konischen Kern einer dritten Bohrung (2d) des Gehäuses (2) zugeordnet ist.

5. Gerät nach einem der Ansprüche 1 bis 4, dadurch gekennzeichnet, daß die Verbindung zwischen den Bohrungen (2a, 2b, 2d) des Gehäuses (2) durch einen Hahn mit Querbohrung (7, 7') verwirklicht ist, um die Einstellung des Querschnitts der Durchlässe zwischen den Bohrungen (2a, 2b, 2d) zu ermöglichen.

6. Gerät nach Anspruch 5, dadurch gekennzeichnet, daß der Hahn mit Querbohrung (7, 7') zur Einstellung in einem Loch (2c) drehbar ist, welches die benachbarten Bohrungen schneidend ausgebildet ist, wobei der Hahn Bereiche umfaßt, zwischen denen sich Schlitze befinden, die die Durchgänge zwischen den Bohrungen bestimmen.

7. Gerät nach Anspruch 6, dadurch gekennzeichnet, daß der Einstellhahn (7, 7') aus zwei getrennten Teilen gebildet ist, welches das unabhängige Einstellen der Winkelposition von jedem der Teile in Abhängigkeit des Bedarfs ermöglicht.

8. Gerät nach einem der Ansprüche 1 bis 6, ferner gekennzeichnet durch eine Schraube oder Schnecke (12), die in die Schraube (5) oder Schnecke mit zylindrischkonischem Kern (5) eingreift.

9. Gerät nach einem der Ansprüche 1 bis 8, gekennzeichnet durch Einrichtungen zum Messen (14, 15, 16) und zur Steuerung (13) für die ständige Kontrolle des freien Gasvolumens in dem Gerät.

10. Gerät nach einem der Ansprüche 1 bis 9, dadurch gekennzeichnet, daß dessen geometrische Achse in einem einstellbaren Winkel zu der horizontalen Ebene geneigt ist, um die Wirkungen eines toten Zwischenraums, der durch das im Inneren des Gerätes auftretende funktionelle Spiel hervorgebracht wird, abzubauen.

Fig. 2

Fig. 1

EP 0 707 534 B1

EP 0 707 534 B1

Fig. 3

11

Fig. 5

Fig. 4

EP 0 707 534 B1

Fig. 7

Fig. 6

EP 0 707 534 B1

Fig. 9

Fig. 8

EP 0 707 534 B1